# EUROPÄISCHE PATENTSCHRIFT

(11) **EP 3 523 462 B1**
(45) Veröffentlichungstag und Bekanntmachung des Hinweises auf die Patenterteilung: **16.09.2020**
(21) Anmeldenummer: 17777586.3
(22) Anmeldetag: 02.10.2017
(51) Int. Cl.: C25B 11/04, C25B 1/04

(54) **VERFAHREN ZUR HERSTELLUNG EINES IN DER WASSEROXIDATION EINSETZBAREN ELEKTROKATALYSATORS**
METHOD FOR PRODUCING AN ELECTROCATALYST FOR USE IN WATER OXIDATION
PROCÉDÉ DE FABRICATION D'UN ÉLECTROCATALYSEUR UTILISABLE DANS L'OXYDATION DE L'EAU

(30) Priorität: 05.10.2016 EP 16192399
(43) Veröffentlichungstag der Anmeldung: 14.08.2019
(73) Patentinhaber: Evonik Operations GmbH, 45128 Essen (DE)
(72) Erfinder: MALJUSCH, Artjom, 44866 Bochum (DE); MARTIN, Andreas, 12524 Berlin (DE); POLYAKOV, Mykola, 18055 Rostock (DE); SURKUS, Annette-Enrica, 18059 Rostock (DE); HOCH, Sascha, 44797 Bochum (DE); BLUG, Matthias, 2930 Brasschaat (BE); DEIS, Wolfgang, 69115 Heidelberg (DE)
(74) Vertreter: Evonik Patent Association
(86) Internationale Anmeldenummer: PCT/EP2017/074926
(87) Internationale Veröffentlichungsnummer: WO 2018/065339

(56) Entgegenhaltungen:
- US-A1- 2015 197 866
- A M Nasser ET AL: "N A N O I D E A Cobalt/copper-decorated carbon nanofibers as novel non-precious electrocatalyst for methanol electrooxidation", , 3. Januar 2014 (2014-01-03), XP055353078, Gefunden im Internet: URL:http://rd.springer.com/content/pdf/10. 1186/1556-276X-9-2.pdf [gefunden am 2017-03-09]
- JAHANGEER AHMED ET AL: "Enhanced Electrocatalytic Activity of Copper-Cobalt Nanostructures", JOURNAL OF PHYSICAL CHEMISTRY C, Bd. 115, Nr. 30, 4. August 2011 (2011-08-04), Seiten 14526-14533, XP055353065, US ISSN: 1932-7447, DOI: 10.1021/jp202396r

## Beschreibung

Die Erfindung befasst sich mit der Herstellung von Elektrokatalysatoren, insbesondere solchen zur Wasseroxidation.

Ein Elektrokatalysator ist ein Stoff, welcher eine elektrochemische Reaktion beschleunigt, ohne dabei selbst verbraucht zu werden.

Ein Beispiel für eine elektrochemische Reaktion ist die Elektrolyse von Wasser H₂O in Wasserstoff H₂ und Sauerstoff O₂. Diese Reaktion wird auch als Wasseroxidation oder Wasserspaltung bezeichnet. Die Anwesenheit eines geeigneten Elektrokatalysators ermöglicht die für die Wasserspaltung notwendige Überspannung zu reduzieren, sodass die Reaktion schneller ablaufen kann.

Ähnlich wie bei heterogenen Katalysatorsystemen, die in thermischen Reaktionen eingesetzt werden, umfassen Elektrokatalysatoren mindestens ein katalytisch aktives Metall bzw. Metalloxid. Das katalytisch aktive Metall kann auf einem katalytisch weniger aktiven Trägermaterial aufgebracht sein, um den Metallbedarf zu senken und / oder besser in Reaktionszone platziert werden zu können. Da sich aber elektrochemische Zellen, das sind Apparaturen, in denen elektrochemische Reaktionen durchgeführt werden, deutlich von Reaktoren zur Durchführung thermischer Reaktionen unterscheiden, gibt es in der Elektrochemie völlig andere Konzepte, wie Katalysatoren in die Apparaturen eingebaut werden können. Vor allem das Trägermaterial von Elektrokatalysatoren unterscheidet sich deutlich von dem Trägermaterial, auf dem klassischerweise katalytisch aktives Material für thermische Reaktionen aufgebracht wird: So muss ein Elektrokatalysator elektrisch leitend sein, um die Elektronen in die Grenzschicht zu leiten, in der die Katalyse abläuft. Die Effizienz einer elektrochemischen Reaktion hängt daher in hohem Maße von dem elektrischen Widerstand des eingesetzten Elektrokatalysators ab: Ein hoher Ohm'scher Widerstand des Elektrokatalysators steigert den Energiebedarf der Elektrolyse. Die in der thermischen Katalyse häufig als Träger eingesetzten Materialien Siliciumdioxid und Aluminiumoxid sind elektrische Nichtleiter und deswegen als Träger für Elektrokatalysatoren denkbar ungeeignet.

In der Wasserspaltung werden die Edelmetalle Platin, Ruthenium oder Iridium als Katalysatoren eingesetzt, aber auch unedle Metalle wie Molybdän, Mangan, Eisen, Nickel oder Kobalt, welche in ihrer oxidischen oder teil-oxidischen Form katalytisch aktiv wirken. Nickeloxid und Kobaltoxid sind vergleichsweise wirtschaftliche Katalysatoren in der Wasserspaltung, da diese Metalle recht preiswert sind und dennoch eine hohe Aktivität aufweisen.

Ein Verfahren zur Herstellung eines Elektrokatalysators mit Kupferoxid und Kobaltoxid als Aktivmaterial ist beschrieben in Patentanmeldung WO2011/004343 A1.

Demnach wird Kupfersulfat und Kobaltchlorid mit Wasser zu einer wässrigen Lösung verrührt. Anschließend wurde Natriumkarbonat in Wasser gelöst und dann zusammen mit der Metallsalzlösung vermischt. Der sich ausbildende Niederschlag wurde abfiltriert, gewaschen und im Vakuum getrocknet. Bei diesem Niederschlag handelt es sich bereits um eine Vorstufe des Katalysators. Um diese in seine aktive Form zu überführen, ist eine Kalzinierung des Pulvers erforderlich. Dafür wird es an Luft bei 400°C für 5 Stunden erhitzt.

Eine niedrige Überspannung ist ein maßgeblicher Performance Indikator eines Elektrokatalysators. Die Überspannung eines Katalysators beschreibt die Differenz zwischen dem Potenzial bei dem die jeweilige Wasserspaltungsreaktion, d. h. die Wasserstoffbildungsreaktion (HER) bzw. die Sauerstoffbildungsreaktion (OER) einsetzt im Vergleich zu dem sich aus der Thermodynamik ergebenen Minimalpotenzial. So geringer die Überspannung ist, desto dichter kann die Zellspannung an das für die Reaktion erforderliche, theoretische Minimum angenähert werden.

In der Wasseroxidation beträgt der Potentialunterschied gegenüber einer Normalwasserstoffelektrode (RHE) 1.23 V. Eine Überspannung von 0.37 V bedeutet, dass die Sauerstoffbildungsreaktion erst bei einer Spannung von 1,6 V vs. RHE ansetzt.

Im Interesse der Energieeffizienz ist die Zellspannung durch den Einsatz geeigneter Elektrokatalysatoren zu reduzieren. Der ideale Fall wäre also Katalysatoren mit einer Überspannung von 0 V einzusetzen.

Vor diesem Hintergrund ist es eine Aufgabe der Erfindung, den bekannten Elektrokatalysator so weiter zu bilden, dass seine Überspannung in der Wasserspaltung reduziert wird.

Gelöst wird diese Aufgabe überraschenderweise dadurch, dass die thermische Behandlung der Katalysatorvorstufe eines Sauerstoffbildungskatalysators mit einem begrenzten Sauerstoffangebot erfolgt. Es wurde nämlich zufällig gefunden, dass bei einer Kalzinierung in einem geschlossenen Glasrohr, also bei einer begrenzten Sauerstoffzufuhr, ein Katalysator erhalten wird, dessen Überspannung zwischen 0.1 V und 0.4 V liegt, damit eine massenspezifische Stromdichte von 10 A/g bei einer Katalysatorbeladung von 250 µg/cm² erreicht werden kann. Nähere Untersuchungen zeigten, dass die bei der thermischen Behandlung verfügbare Sauerstoffmenge nicht größer sein darf als etwa 8 mmol pro g Katalysatorvorstufe. Eine Kalzinierung unter inerter Schutzatmosphäre (d.h. in Abwesenheit von Sauerstoff) führte zu keinem aktiven Katalysator. Vielmehr ist ein Mindestangebot von Sauerstoff von etwa 0.01 mmol pro g Katalysatorvorstufe erforderlich.

Es wird vermutet, dass die hohe OER-Aktivität durch die Reduktion eines Metalls von einer hohen Oxidationsstufe (wie z.B. im eingesetzten Salz vorhanden) zu einem Metalloxid in einem niedrigeren Oxidationzustand erreicht wird, so das der Katalysator bei dem entsprechend anodischen Potential als Hydroxid bzw. Oxohydroxid vorliegt und dadurch eine hohe Katalytische Aktivität aufweist.

Gegenstand der Erfindung ist mithin ein Verfahren zur Herstellung eines Elektrokatalysators, mit den folgenden Schritten:
a) Bereitstellen von Wasser;
b) Bereitstellen von mindestens einem Kupfersalz;
c) Bereitstellen von mindestens einem Kobaltsalz;
d) Bereitstellen von mindestens einem organischen Reduktionsmittel;
e) Herstellen einer wässrigen Lösung aus dem Wasser, aus den bereitgestellten Metallsalzen und aus dem organischen Reduktionsmittel;
f) Erhalt eines Gels aus besagter wässrigen Lösung;
g) Trocknen des Gels unter Erhalt eines Feststoffes;
h) Zermahlen des Feststoffes zu einer pulverförmigen Katalysatorvorstufe;
i) Thermische Behandlung der pulverförmigen Katalysatorvorstufe in Gegenwart von Sauerstoff unter Erhalt des Elektrokatalysators,
j) wobei das Angebot an Sauerstoff bei der thermischen Behandlung der pulverförmigen Katalysatorvorstufe begrenzt wird,
k) und wobei das Verhältnis aus der begrenzt angebotenen Stoffmenge Sauerstoff bezogen auf die Masse der behandelten Katalysatorvorstufe zwischen 0.01 mmol/g und 8 mmol/g beträgt.

Weitere Gegenstände der Erfindung sind der Elektrokatalysator, der nach diesem Verfahren erhältlich ist, eine elektrochemische Zelle, in der ein solcher Elektrokatalysator eingebaut ist und schließlich ein Verfahren zur Herstellung von Wasserstoff und Sauerstoff durch elektrochemische Spaltung von Wasser in Gegenwart dieses Elektrokatalysators. All diese Erfindungsgegenstände sind durch das gemeinschaftliche Konzept der Herstellung des Katalysators mit begrenztem Sauerstoffangebot verbunden.

Bei dem im Verfahren bereitgestellten Metallsalze (gemeint sind Kupfersalz und Kobaltsalz) handelt es sich vorzugsweise um Acetate und/oder um Nitrate und/oder um Oxalate. So kann beispielsweise eine Kupferacetat und ein Kobaltoxalat bereitgestellt werden oder ein Kupfernitrat und ein Kobaltnitrat.

Die besten Ergebnisse wurden erzielt, wenn die Metallsalze Kupfer(II)-nitrat und Kobalt(II)-nitrat eingesetzt wurden.

Als organisches Reduktionsmittel wird vorzugsweise eine Karbonsäure verwendet. Grundsätzlich geeignet sind Zitronensäure, Oxalsäure und Maleinsäure. Die besten Ergebnisse wurden mit Zitronensäure erzielt.

In einer besonders bevorzugten Ausführungsform der Erfindung werden die Komponenten Kupfer(II)-nitrat, Kobalt(II)-nitrat und Zitronensäure so bereitgestellt, dass die wässrige Lösung die folgende, sich zu 100 Gew.-% ergänzende Zusammensetzung aufweist:

| | |
|---|---|
| Kupfer(II)-nitrat: | 1.3 Gew.-% bis 2.6 Gew.-%; |
| Kobalt(II)-nitrat: | 2.6 Gew.-% bis 5.2 Gew.-%; |
| Zitronensäure: | 4 Gew.-% bis 8 Gew.-%; |
| Wasser: | 84.2 Gew.-% bis 92.1 Gew.-%; |
| sonstige Stoffe: | 0 Gew.-% bis 1 Gew.-%. |

Das molare Verhältnis von Kobalt(II)-nitrat zu Kupfer(II)-nitrat sollte dabei zwischen 3 und 9 liegen, da sich zeigte, dass die Sauerstoffbildungsaktivität (OER-Aktivität) des herstellten Katalysators abhängig von dem Verhältnis Co:Cu ist und im Bereich von 3 bis 9 ein Maximum zeigt. Dementsprechend sind die Salze in diesem Verhältnis einzuwiegen, dass das molare Verhältnis der Nitrate in der Lösung dem späteren Metallverhältnis im Katalysator entspricht.

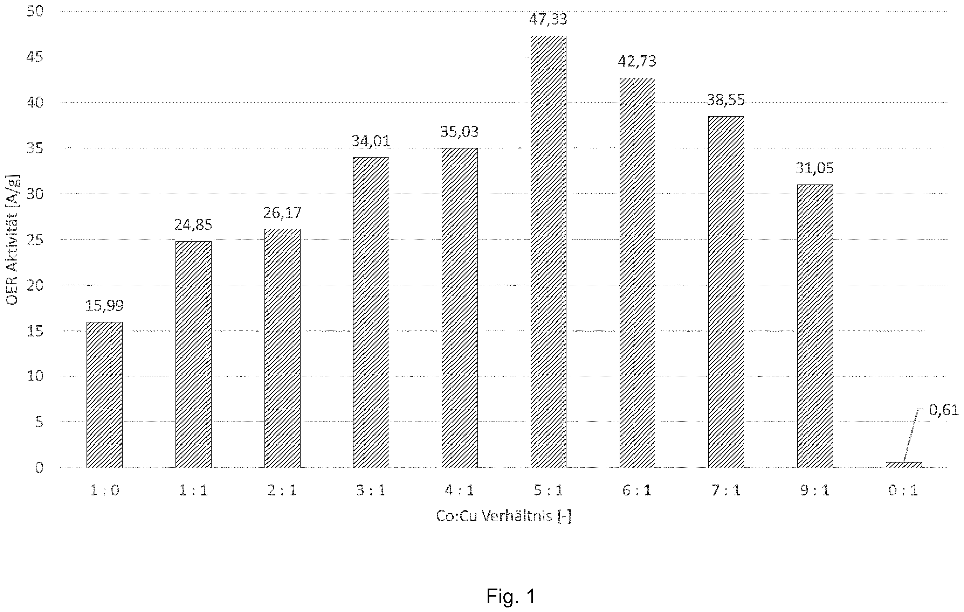

Gegenüber dem oben zitierten Stand der Technik ist hier das Kobalt/Kupfer-Verhältnis recht groß: So betrug das Verhältnis dort lediglich 2. Allerdings wurde dabei auch nur eine massenspezifische OER-Aktivität von etwa 18 A/g bei einer Spannung von 1,6V vs. RHE festgestellt, wobei in dem hier gennannten Bereich von 3 bis 9 Werte über 30 A/g erzielt werden; vgl. Figur 1.
Figur 1: OER-Aktivität in Abhängigkeit des Verhältnisses Co:Cu

Die maximale OER-Aktivität von 47.33 A/g wurde bei einem Verhältnis Co:Cu von etwa 5:1 gesehen. Deswegen sollte das molare Verhältnis von Kobalt(II)-nitrat zu Kupfer(II)-nitrat zwischen 4 und 6 liegen.

Der erfindungsgemäße Katalysator zeichnet sich durch eine hohe Aktivität in der Wasserspaltung aus, obwohl er ohne kostspielige Edelmetalle auskommt. Deswegen ist der Katalysator besonders wirtschaftlich. Bevorzugt wird das Herstellverfahren so durchgeführt, dass die wässrige Lösung ohne Zugabe von Silber, Gold, Platin, Iridium, Ruthenium, Rhodium oder Palladium hergestellt wird. Entsprechend ist der Katalysator später praktisch frei von diesen Edelmetallen. Selbstverständlich werden sich immer Spuren von Edelmetalle in dem Katalysator nachweisen lassen, etwa als Abrieb aus Apparaturen, die bei seiner Herstellung eingesetzt wurden. Dieser Edelmetallgehalt ist dann aber nicht beabsichtigt und irrelevant.

Durch die Reaktion der Metallkationen mit der Karbonsäure wird in der wässrigen Lösung ein entsprechender Metallkomplex gebildet. Wenn die wässrige Lösung über einen Zeitraum von 0.1 h bis 24 h bei einer Temperatur zwischen 60°C und 120°C gehalten und dabei gerührt wird, so führt das zur Ausbildung einer viskosen Lösung (Gel) bedingt durch das Verdampfen eines Teiles vom Wasser. Das so erhaltene Gel wird dann getrocknet, sodass ein Feststoff zurückbleibt. Die Trocknung erfolgt über einen Zeitraum von 0.1 h bis 24 h bei einer Temperatur zwischen 60°C und 140°C.

Nach der Trocknung bleibt ein Feststoff zurück, der zu einem Pulver vermahlen wird. Da der trockene Feststoff stark hygroskopisch ist, empfiehlt sich eine Handhabung unter Abdeckung. Das Pulver wird dann bei einer Temperatur zwischen 250°C und 350°C über einen Zeitraum von 0.1 h bis 24 h thermisch behandelt (pyrolysiert). Erfindungswesentlich ist, dass das Sauerstoffangebot während der thermischen Behandlung begrenzt ist auf einen Wert zwischen 0.01 und 8 mmol/g Feststoff. Das kann etwa durch Verwendung eines geschlossenen Ofens mit entsprechend begrenzten Volumen geschehen oder in einem industriellen Durchlaufofen, dessen Atmosphäre auf einen entsprechend definierten und kontrollierten Sauerstoffgehalt aufweist.

Eine erfindungsgemäße thermische Behandlung führt zu einem Elektrokatalysator, welcher vermutlich eine Matrix aus Kohlenstoff umfasst, auf deren Oberfläche katalytisch aktive Zentren basierend auf Kobalt und funktionale Zentren basierend auf Kupfer dispergiert sind. Aufgrund dieser Zusammensetzung und Morphologie ist der Katalysator elektrisch leitend.

Chemisch weist der erfindungsgemäß hergestellte Elektrokatalysator die folgende, sich zu 100 Gew.-% ergänzenden Zusammensetzung auf:

| | |
|---|---|
| Kupfer: | 6 Gew.-% bis 30 Gew.-%; |
| Cobalt: | 54 Gew.-% bis 30 Gew.-%; |
| Kohlenstoff | 10 Gew.-% bis 25 Gew.-%; |
| Sauerstoff: | 15 Gew.-% bis 30 Gew.-%; |
| Summe aus Ag, Au, Pt, Ir, Ru, Rh, Pd: | einschließlich 0 bis 0.1 Gew.-%; |
| Sonstige Stoffe: | einschließlich 0 bis 1 Gew.-%. |

Das molare Verhältnis von Cobalt zu Kupfer sollte aus den oben genannten Gründen zwischen 4 und 6 liegen. Ein Teil der enthaltenen Metalle liegt in oxidisch kristallischer Form vor, ein Teil der enthaltenen Metalle liegt in oxidisch amorpher Form vor und ein Teil der Metalle liegt in metallischer Form vor. Der Kohlenstoff liegt überwiegend amorph vor. Die Edelmetalle sollten möglichst nicht enthalten sein oder allenfalls als Spurenelemente. Zu den sonstigen Stoffen zählen andere Verunreinigungen oder Produktionshilfsstoffe, die aber nicht erforderlich sind.

Ein erfindungsgemäß hergestellter Elektrokatalysator zeichnet sich durch seine geringe Überspannung und hohe Aktivität aus: Die in der Wasseroxidation bei einer Stromdichte von 10 A/g und bei einer Katalysatorbeladung von 250 µg/cm² gemessene Überspannung beträgt lediglich zwischen 0.1°V und 0.4 V.

Der Elektrokatalysator wird vorzugsweise in einer elektrochemischen Zelle eingebaut, die für die Elektrolyse von Wasser, also der Herstellung von Wasserstoff und Sauerstoff bestimmt ist. Eine solche elektrochemische Zelle wird als Elektrolyseur bezeichnet. Er weist eine Anode und eine Kathode auf. Zwischen den beiden Elektroden ist eine elektrische Spannung dergestalt anlegbar, dass die Anode den positiven Pol und die Kathode den negativen Pol der elektrochemischen Zelle bildet. Zwischen der Anode und der Kathode angeordnet ist ein elektrisch isolierender, ionisch leitender Separator. Dieses Bauteil verhindert einen elektrischen Kurzschluss zwischen den beiden Elektroden und erlaubt gleichzeitig den Austausch der elektrolytisch getrennten Ionen zwischen den Elektroden. Zwischen Anode und Kathode erstreckt sich ein Reaktionsraum zur Aufnahme von Wasser und zur getrennten Abgabe von Wasserstoff und Sauerstoff. Der Separator trennt den Reaktionsraum in einen anodenseitigen Teil und in einen kathodenseitigen Teil. Der erfindungsgemäße Elektrokatalysator wird in dem anodenseitigen Teil des Reaktionsraums angeordnet, also auf der elektrisch positiven Teil der Zelle. In dem kathodischen Teil der Zelle funktioniert der Katalysator nicht und würde über Dauer elektrochemisch in seine metallische Formen umgewandelt werden.

Bei dem Separator handelt es sich entweder um ein poröses Diaphragma oder um eine Membran. Der Unterschied zwischen einer Membran und einem Diaphragma ist, dass das Diaphragma aufgrund seiner Porosität mechanisch für die Ionen durchlässig ist, ähnlich wie ein Sieb. Eine Membran ist demgegenüber geschlossen und bewerkstelligt den Ionentransport durch die elektrostatische Wechselwirkung zwischen den Ionen und geladenen funktionellen Gruppen (z.B. SO₃⁻ oder NH₄⁺) in der Membran. Vereinfacht gesprochen, wird das Ion von einer geladenen Gruppe des Membranmaterials hindurchgereicht, indem es sich von einer zu der benachbarten Gruppe fortbewegt (engl. hopping mechanism), bis es die Membran durchdrungen hat. Die Membran kann insoweit selbst als Elektrolyt wirken, sodass das zu spaltende Wasser dann nicht ionisch leitend sein muss.

Aufgrund der unterschiedlichen Funktionsweisen von Membran und Diaphragma wird der Elektrokatalysator unterschiedlich in der elektrochemischen Zelle verbaut: Sofern eine Membran als Separator verwendet wird, kann der Elektrokatalysator als Beschichtung unmittelbar auf die Membran aufgetragen werden. Dies ermöglicht eine besonders dichte Annährung der Anode an den Separator, wodurch die Zelle besonders kompakt ausfallen kann. Gleichzeitig kann die Anode näher zur Kathode gebracht werden, was zu einer geringeren Zellspannung führen wird, da der Ohm'sche Widerstand der Zelle unter anderem von dem Abstand zwischen der Anode und Kathode abhängig ist und in diesen Fall kleiner wird.

Ein Diaphragma kann hingegen nicht beschichtet werden, da die katalytisch aktive Beschichtung die Poren zusetzt und den lonenaustausch über das Diaphragma unterbindet. In diesem Fall kann das Katalysatormaterial auf eine zwischen Separator und Anode angeordnete, poröse, elektrisch leitfähige Trägerstruktur aufgebracht werden. Dabei kann es sich um einen metallischen Schaumstoff etwa aus Nickel handeln. Das Nickel wirkt in dem Fall auch katalytisch, seine elektrische Leitfähigkeit stellt den Transport der Elektronen zu den katalytisch aktiven Zentren sicher. Porös muss die Trägerstruktur sein, damit das Wasser an die aktiven Zentren gelangt und der gebildete Sauerstoff abtransportiert werden kann.

Wenn ein mit dem Katalysator beschichtetes Trägermaterial zwischen Anode und Separator angeordnet wird, wird der Zellaufbau dadurch recht stark. Im Interesse eines geringen Innenwiderstandes der Zelle ist aber eine sehr dichte Annährung der Elektroden an den Separator wünschenswert. Um dies ohne katalytische Beschichtung des Separators zu ermöglichen, kann der erfindungsgemäße Elektrokatalysator auch als Beschichtung auf eine poröse Anode aufgebracht werden. Die Anode wird dann von dem Elektrolyt durchtränkt. Die Anode kann dann vorzugsweise aus einem Metallschaum oder einem textilen Material aus metallischen Fasern bestehen. Als Anodenmetall eignet sich Nickel besonders gut.

Die Kupfer- und Kobalt-basierte Katalysatoren werden von sauren Elektrolyten angegriffen und desaktiviert. Mithin sollte der erfindungsgemäße Elektrokatalysator nur im neutralen oder basischen Milieu eingesetzt werden. Dies bedeutet, dass das zu spaltende Wasser in einem wässrigen Medium enthalten sein muss, dessen pH-Wert zwischen 7 und 14 liegt. Einfachstenfalls erfolgt die Einstellung der Basizität über das wässrige Medium. Es wird also ein basisches wässriges Medium verwendet, dessen pH-Wert größer ist als 7. Das wässrige Medium muss einerseits das zu spaltende Wasser enthalten, und andererseits mindestens eine Hydroxid- oder Karbonat- oder Phosphat- oder Hydrogenkarbonat- oder Hydrogenphosphat- oder Nitrat- oder Sulfat-Verbindung eines der folgenden Elemente: Lithium, Natrium, Kalium, Magnesium, Calcium, Strontium, Barium. Diese Verbindungen machen das wässrige Medium alkalisch und führen zur ionischen Leitfähigkeit der Lösung. Bevorzugt handelt es sich bei dem wässrigen Medium um Kalilauge oder um Natronlauge, also einem Gemisch aus Wasser und Kaliumhydroxid bzw. Natriumhydroxid. Kalilauge und Natronlauge sind nämlich preiswerte Massenchemikalien. Selbstverständlich können auch mehrere alkalische Verbindungen gemischt verwendet werden.

Als Grenzfall kann auch reines Wasser (pH=7) als "wässriges Medium" eingesetzt werden. Da dies aber nicht ionisch leitend ist, muss ein Festkörperelektrolyt als Separator verwendet werden, etwa eine ionenleitfähige Membran.

Für die Durchführung der Wasserspaltung in Gegenwart des erfindungsgemäßen Katalysators wird vorzugsweise ein Elektrolyseur mit den vorerörterten Merkmalen verwendet.

Die Erfindung soll nun anhand von Beispielen näher erläutert werden.

### Beispiel 0 Herstellung eines Elektrokatalysators nach dem Stand der Technik

Eine Lösung von 9 g (36 mmol) CuSO₄·5H₂O und 20 g (84 mmol) CoCl₂·6H₂O in 400 ml destilliertes Wasser zur Lösung von 24 g (226 mmol) Na₂CO₃ in 300 ml destilliertes Wasser geben und 1h intensiv rühren lassen (Rührerdrehzahl 600 Umdrehung pro Minute). Das Sediment ab filtrieren und 4 mal mit destilliertem Wasser gewaschen. Trocknen erfolgte bei 90 °C, 18 h im Vakuumschrank (Druck 20*10² Pa). Der Niederschlag wurde im Muffelofen (Aufheizrate: 5 K/min, 400 °C, 5h, Abkühlung mit dem Ofen) kalziniert. Dabei wurde Sauerstoffbedarf in der Ofenatmosphäre nicht reglementiert, da Umgebungsluft.
Katalysatorausbeute: 9,424 g

### Beispiel 1: Herstellung des erfindungsgemäßen Elektrokatalysators

Die Lösung von 1.44 g Citronensäure in 7.5 ml destilliertem Wasser wurde zur Lösung von 1.455 g Co(NO₃)₂·6H₂O und 0.604 g Cu(NO₃)2·3H₂O in 7.5 ml destilliertem Wasser bei Raumtemperatur zugegeben und 30 Min bei 200 Umdrehung pro Minute gerührt.

Die Temperatur wurde dann auf 90 °C erhöht und unter Rühren das Wasser zum Teil abgedampft, so dass die Lösung leicht zäher wurde, jedoch nicht fest. Etwa Hälfte des Volumens wurde dabei in ca. 1 Stunde abgedampft.

Die noch flüssige Lösung (Gel) wurde dann bei 120 °C 17 h im Trockenschrank getrocknet wodurch ein schaumartiges Material entstand (Katalysatorpräkursor). Das getrocknete Material wurde in einer Kugelmühle 10 Min (Stufe 3) zum Pulver zermahlen.

Das Pulver wurde anschließend in einem mit der Umgebungsluft gefülltem Rohrofen bei 300 °C über 3 h thermisch behandelt. Dies geschah unter der Voraussetzung, dass die Gase aus dem Rohr entweichen jedoch keine Gase vom außen gelangen können. Das Sauerstoffangebot berechnete sich zu 8 mmol/g. Abkühlung in N₂ Fluss (10 ml/min).

Das fertige Pulver wurde in einer Kugelmühle 5 Min (Stufe 1) homogenisiert.
Katalysatorausbeute: 757 mg.

### Beispiel 2: Herstellung des erfindungsgemäßen Elektrokatalysators

15 ml der 1M-Lösung der Oxalsäure in destilliertem Wasser wurde zum Gemisch der 10 ml 1M-Lösung von Co(NO3)2·6H2O und 5 ml 1M-Lösung von Cu(NO₃)₂·3H₂O in destilliertem Wasser bei Raumtemperatur zugegeben und 30 Min bei 200 Umdrehung pro Minute gerührt.

Die Temperatur wurde dann auf 90 °C erhöht und unter Rühren das Wasser zum Teil abgedampft, so dass die Lösung leicht zäher wurde, jedoch nicht fest. Etwa Hälfte des Volumens wurde dabei in ca. 1 Stunde abgedampft.

Die noch flüssige Lösung (Gel) wurde dann bei 120 °C 17 h im Trockenschrank getrocknet wodurch ein schaumartiges Material entstand (Katalysatorpräkursor). Das getrocknete Material wurde in einem Porzellanmörser zum Pulver zermahlen.

Das Pulver wurde anschließend in einem mit der Umgebungsluft gefülltem Rohrofen bei 300 °C über 3 h thermisch behandelt. Dies geschah unter der Voraussetzung, dass die Gase aus dem Rohr entweichen jedoch keine Gase vom außen gelangen können. Das Sauerstoffangebot berechnete sich zu 4 mmol/g. Abkühlung in N₂ Fluss (10 ml/min)
Katalysatorausbeute: 1,32 g.

### Beispiel 3: Herstellung des erfindungsgemäßen Elektrokatalysators

15 ml der 1M-Lösung der Maleinsäure in destilliertem Wasser wurde zum Gemisch der 10 ml 1M-Lösung von Co(NO₃)₂·6H₂O und 5 ml 1M-Lösung von Cu(NO₃)₂·3H₂O in destilliertem Wasser bei Raumtemperatur zugegeben und 30 Min bei 200 Umdrehung pro Minute gerührt.

Die Temperatur wurde dann auf 90 °C erhöht und unter Rühren das Wasser zum Teil abgedampft, so dass die Lösung leicht zäher wurde, jedoch nicht fest. Etwa Hälfte des Volumens wurde dabei in ca. 1 Stunde abgedampft.

Die noch flüssige Lösung (Gel) wurde dann bei 120 °C 17 h im Trockenschrank getrocknet wodurch ein schaumartiges Material entstand (Katalysatorpräkursor). Das getrocknete Material wurde in einem Porzellanmörser zum Pulver zermahlen. Da das Material stark hygroskopisch ist, muss es danach unbedingt verschlossen aufbewahrt werden.

Das Pulver wurde anschließend in einem mit der Umgebungsluft gefülltem Rohrofen bei 300 °C über 3 h thermisch behandelt. Dies geschah unter der Voraussetzung, dass die Gase aus dem Rohr entweichen jedoch keine Gase vom außen gelangen können. Das Sauerstoffangebot berechnete sich zu 4 mmol/g. Abkühlung in N₂ Fluss (10 ml/min)

Katalysatorausbeute: 2,03 g.

### Beispiel 4: Herstellung des erfindungsgemäßen Elektrokatalysators

Die Lösung von 2,88 g Citronensäure in 15 ml destilliertem Wasser wurde zur Lösung von 2,491 g Cobalt(II)-acetat Tetrahydrat und 0,998 g Kupfer(II)-acetat Monohydrat in 15 ml destilliertem Wasser bei Raumtemperatur zugegeben und 30 Min bei 200 Umdrehung pro Minute gerührt.

Die Temperatur wurde dann auf 90 °C erhöht und unter Rühren das Wasser zum Teil abgedampft, so dass die Lösung leicht zäher wurde, jedoch nicht fest. Etwa Hälfte des Volumens wurde dabei in ca. 1 Stunde abgedampft.

Die noch flüssige Lösung (Gel) wurde dann bei 120 °C 17 h im Trockenschrank getrocknet wodurch ein schaumartiges Material entstand (Katalysatorpräkursor). Das getrocknete Material wurde in einer Kugelmühle 10 Min (Stufe 3) zum Pulver zermahlen.

Das Pulver wurde anschließend in einem mit der Umgebungsluft gefülltem Rohrofen bei 300 °C über 3 h thermisch behandelt. Dies geschah unter der Voraussetzung, dass die Gase aus dem Rohr entweichen jedoch keine Gase vom außen gelangen können. Das Sauerstoffangebot berechnete sich zu 4 mmol/g.
Abkühlung in N₂ Fluss (10 ml/min)
Katalysatorausbeute: 1,65 g.

### Beispiel 5: Herstellung des erfindungsgemäßen Elektrokatalysators

15 ml der 1M-Lösung der Oxalsäure in destilliertem Wasser wurde zum Gemisch der 10 ml 1M-Lösung von Cobalt(II)-acetat Tetrahydrat und 5 ml 1M-Lösung von Kupfer(II)-acetat Monohydrat in destilliertem Wasser bei Raumtemperatur zugegeben und 30 Min bei 200 Umdrehung pro Minute gerührt.

Die Temperatur wurde dann auf 90 °C erhöht und unter Rühren das Wasser zum Teil abgedampft, so dass die Lösung leicht zäher wurde, jedoch nicht fest. Etwa Hälfte des Volumens wurde dabei in ca. 1 Stunde abgedampft.

Die noch flüssige Lösung (Gel) wurde dann bei 120 °C 17 h im Trockenschrank getrocknet wodurch ein schaumartiges Material entstand (Katalysatorpräkursor). Das getrocknete Material wurde in einem Porzellanmörser zum Pulver zermahlen.

Das Pulver wurde anschließend in einem mit der Umgebungsluft gefülltem Rohrofen bei 300 °C über 3 h thermisch behandelt. Dies geschah unter der Voraussetzung, dass die Gase aus dem Rohr entweichen jedoch keine Gase vom außen gelangen können. Das Sauerstoffangebot berechnete sich zu 4 mmol/g. Abkühlung in N₂ Fluss (10 ml/min)
Katalysatorausbeute: 1,65 g.

### Beispiel 6: Herstellung des erfindungsgemäßen Elektrokatalysators

15 ml der 1M-Lösung der Maleinsäure in destilliertem Wasser wurde zum Gemisch der 10 ml 1M-Lösung von Cobalt(II)-acetat Tetrahydrat und 5 ml 1M-Lösung von Kupfer(II)-acetat Monohydrat in destilliertem Wasser bei Raumtemperatur zugegeben und 30 Min bei 200 Umdrehung pro Minute gerührt.

Die Temperatur wurde dann auf 90 °C erhöht und unter Rühren das Wasser zum Teil abgedampft, so dass die Lösung leicht zäher wurde, jedoch nicht fest. Etwa Hälfte des Volumens wurde dabei in ca. 1 Stunde abgedampft.

Die noch flüssige Lösung (Gel) wurde dann bei 120 °C 17 h im Trockenschrank getrocknet wodurch ein schaumartiges Material entstand (Katalysatorpräkursor). Das getrocknete Material wurde in einem Porzellanmörser zum Pulver zermahlen.

Das Pulver wurde anschließend in einem mit der Umgebungsluft gefülltem Rohrofen bei 300 °C über 3 h thermisch behandelt. Dies geschah unter der Voraussetzung, dass die Gase aus dem Rohr entweichen jedoch keine Gase vom außen gelangen können. Das Sauerstoffangebot berechnete sich zu 4 mmol/g. Abkühlung in N₂ Fluss (10 ml/min)
Katalysatorausbeute: 2,29 g.

### Evaluierung der OER-Aktivität der hergestellten Elektrokatalysatoren

Die OER-Aktivität der hergestellten Elektrokatalysatoren wurde mittels rotierender Glaskohlenstoff-Diskelektrode (GC-RDE) in 0.1 M KOH bei 400 rpm getestet. Dafür wurde eine Katalysatortinte bestehend aus 0,5 mL Ethanol (p.a.), 0,5 mL deionisiertes Wasser, 5 mg Elektrokatalysator und 1 mg Nafion® Polymer hergestellt und 5 µL dieser Tinte wurde auf die GC-RDE-Elektrode aufgetragen und über Nacht getrocknet. Zur Evaluierung der elektrochemischen Aktivität wurde lineare Voltammetrie (LSV) mit einer Vorschubgeschwindigkeit von 5 mV/s eingesetzt. Die IR-Korrektur wurde wie oft in der Literatur beschrieben mittels Impedanzspektroskopie bei 100 kHz durchgeführt. Die Ergebnisse der Evaluierung der OER-Aktivitäten der hergestellten Elektrokatalysatoren sind in der Figur 1 dargestellt.

Ersichtlich ist, dass bei einem Kobalt zu Kupfer-Verhältnis von etwa 5 die beste OER Aktivität erreicht wurde.

## Patentansprüche

1. Verfahren zur Herstellung eines Elektrokatalysators, mit den folgenden Schritten:
a) Bereitstellen von Wasser;
b) Bereitstellen von mindestens einem Kupfersalz;
c) Bereitstellen von mindestens einem Kobaltsalz;
d) Bereitstellen von mindestens einem organischen Reduktionsmittel;
e) Herstellen einer wässrigen Lösung aus dem Wasser, aus den bereitgestellten Metallsalzen und aus dem organischen Reduktionsmittel;
f) Erhalt eines Gels aus besagter wässrigen Lösung;
g) Trocknen des Gels unter Erhalt eines Feststoffes;
h) Zermahlen des Feststoffes zu einer pulverförmigen Katalysatorvorstufe;
i) Thermische Behandlung der pulverförmigen Katalysatorvorstufe in Gegenwart von Sauerstoff unter Erhalt des Elektrokatalysators;
**dadurch gekennzeichnet,**
j) **dass** das Angebot an Sauerstoff bei der thermischen Behandlung der pulverförmigen Katalysatorvorstufe begrenzt wird,
k) wobei das Verhältnis aus der begrenzt angebotenen Stoffmenge Sauerstoff bezogen auf die Masse der behandelten Katalysatorvorstufe zwischen 0.01 mmol/g und 8 mmol/g beträgt.

2. Verfahren nach Anspruch 1, **dadurch gekennzeichnet, dass** es sich bei den bereitgestellten Metallsalzen um Acetate und/oder um Nitrate und/oder um Oxalate handelt.

3. Verfahren nach Anspruch 2, **dadurch gekennzeichnet, dass** es sich bei den bereitgestellten Metallsalzen um Kupfer(II)-nitrat und um Kobalt(II)-nitrat handelt.

4. Verfahren nach Anspruch 1 oder einem der Ansprüche 2 bis 3, **dadurch gekennzeichnet, dass** es sich bei dem das organischen Reduktionsmittel um eine Säure handelt, welche ausgewählt ist aus der Gruppe umfassend die folgenden Säuren: Zitronensäure, Oxalsäure, Maleinsäure.

5. Verfahren nach Anspruch 4, **dadurch gekennzeichnet, dass** es sich bei dem organischen Reduktionsmittel um Zitronensäure handelt.

6. Verfahren nach Anspruch 5, **dadurch gekennzeichnet, dass** die wässrige Lösung die folgende, sich zu 100 Gew.-% ergänzende Zusammensetzung aufweist:
| | |
|---|---|
| Kupfer(II)-nitrat: | 1.3 Gew.-% bis 2.6 Gew.-%; |
| Kobalt(II)-nitrat: | 2.6 Gew.-% bis 5.2 Gew.-%; |
| Zitronensäure: | 4 Gew.-% bis 8 Gew.-%; |
| Wasser: | 84.2 Gew.-% bis 92.1 Gew.-% |
| sonstige Stoffe: | 0 Gew.-% bis 1 Gew.-%; |
unter der Maßgabe, dass das molare Verhältnis von Kobalt(II)-nitrat zu Kupfer(II)-nitrat zwischen 3 und 9 liegt.

7. Verfahren nach Anspruch 6, unter der Maßgabe, dass das molare Verhältnis von Kobalt(II)-nitrat zu Kupfer(II)-nitrat zwischen 4 und 6 liegt.

8. Verfahren nach Anspruch 1 oder einem der Ansprüche 2 bis 7, **dadurch gekennzeichnet, dass** die wässrige Lösung ohne Zugabe von Silber, Gold, Platin, Iridium, Ruthenium, Rhodium oder Palladium hergestellt wird.

9. Verfahren nach Anspruch 1 oder einem der Ansprüche 2 bis 8, **dadurch gekennzeichnet, dass** das Gel dadurch erhalten wird, dass die wässrige Lösung über einen Zeitraum von 0.1 h bis 24 h bei einer Temperatur zwischen 60°C und 120°C gehalten und dabei gerührt wird.

10. Verfahren nach Anspruch 1 oder einem der Ansprüche 2 bis 9, **dadurch gekennzeichnet, dass** der Feststoff dadurch erhalten wird, dass das Gel über einen Zeitraum von 0.1 h bis 24 h bei einer Temperatur zwischen 60°C und 140°C getrocknet wird.

11. Verfahren nach Anspruch 1 oder einem der Ansprüche 2 bis 10, **dadurch gekennzeichnet, dass** die thermische Behandlung der pulverförmigen Katalysatorvorstufe bei einer Temperatur zwischen 250°C und 350°C über einen Zeitraum von 0.1 h bis 24 h erfolgt.

12. Elektrokatalysator umfassend eine Matrix aus Kohlenstoff auf deren Oberfläche katalytisch aktive Zentren basierend auf Kobalt und katalytisch aktive Zentren basierend auf Kupfer dispergiert sind, hergestellt nach Anspruch 1 oder einem der Ansprüche 2 bis 11.

13. Elektrokatalysator nach Anspruch 12, **dadurch gekennzeichnet, dass** seine in der Wasseroxidation bei einer Stromdichte von 10 mA/cm² und bei einer Katalysatorbeladung von 250 µg/cm² gemessene Überspannung zwischen 0.1 und 0.4 V beträgt.

14. Elektrochemische Zelle für die Elektrolyse von Wasser, mit einer Anode und mit einer Kathode, zwischen denen eine elektrische Spannung dergestalt anlegbar ist, dass die Anode den positiven Pol und die Kathode den negativen Pol der elektrochemischen Zelle bildet, mit einem zwischen Anode und Kathode angeordneten, elektrisch isolierenden, ionisch leitenden Separator, und mit einem sich zwischen Anode und Kathode erstreckenden Reaktionsraum zur Aufnahme von Wasser und zur getrennten Abgabe von Wasserstoff und Sauerstoff, wobei der Reaktionsraum von dem Separator in einen anodenseitigen Teil und in einen kathodenseitigen Teil getrennt wird, und wobei im anodenseitigen Teil des Reaktionsraums ein Elektrokatalysator angeordnet ist, **dadurch gekennzeichnet,**
**dass** es sich bei dem Elektrokatalysator um einen Elektrokatalysator nach Anspruch 12 handelt.

15. Elektrochemische Zelle nach Anspruch 14, **dadurch gekennzeichnet, dass** es sich bei dem Separator um ein poröses Diaphragma handelt.

16. Elektrochemische Zelle nach Anspruch 14, **dadurch gekennzeichnet, dass** es sich bei dem Separator um eine Membran handelt.

17. Elektrochemische Zelle nach Anspruch 16, **dadurch gekennzeichnet, dass** der Elektrokatalysator als Beschichtung unmittelbar auf die Membran aufgetragen ist.

18. Elektrochemische Zelle nach Anspruch 15 oder 16, **dadurch gekennzeichnet, dass** der Elektrokatalysator als Beschichtung auf eine zwischen Separator und Anode angeordnete, poröse, elektrisch leitfähige Trägerstruktur aufgebracht ist.

19. Elektrochemische Zelle nach Anspruch 15 oder 16, bei welcher die Anode porös ausgeführt ist, **dadurch gekennzeichnet, dass** der Elektrokatalysator als Beschichtung auf eine poröse Anode aufgebracht ist.

20. Verfahren zur Herstellung von Wasserstoff (H₂) und Sauerstoff (O₂) durch Elektrolyse von Wasser (H₂O), durchgeführt in Gegenwart eines Elektrokatalysators nach Anspruch 12.

21. Verfahren nach Anspruch 20, **dadurch gekennzeichnet, dass** das Wasser in einem basischen wässrigen Medium enthalten ist, dessen pH-Wert zwischen 7 und 14 liegt.

22. Verfahren nach Anspruch 20 oder nach Anspruch 21, durchgeführt in einer elektrochemischen Zelle nach einem der Ansprüche 14 bis 19.

## Claims

1. Process for producing an electrocatalyst, comprising the following steps:
a) providing water;
b) providing at least one copper salt;
c) providing at least one cobalt salt;
d) providing at least one organic reducing agent;
e) producing an aqueous solution from the water, the metal salts provided and the organic reducing agent;
f) obtaining a gel from said aqueous solution;
g) drying the gel to obtain a solid material;
h) grinding the solid material to give a pulverulent catalyst precursor;
i) subjecting the pulverulent catalyst precursor to thermal treatment in the presence of oxygen to obtain the electrocatalyst;
**characterized in that**
j) the supply of oxygen in the thermal treatment of the pulverulent catalyst precursor is limited,
k) where the ratio of the limited molar amount of oxygen supplied relative to the mass of the catalyst precursor treated is between 0.01 mmol/g and 8 mmol/g.

2. Process according to Claim 1, **characterized in that** the metal salts provided are acetates and/or nitrates and/or oxalates.

3. Process according to Claim 2, **characterized in that** the metal salts provided are copper(II) nitrate and cobalt(II) nitrate.

4. Process according to Claim 1 or either of Claims 2 and 3, **characterized in that** the organic reducing agent is an acid selected from the group comprising the following acids: citric acid, oxalic acid, maleic acid.

5. Process according to Claim 4, **characterized in that** the organic reducing agent is citric acid.

6. Process according to Claim 5, **characterized in that** the aqueous solution has the following composition that adds up to 100% by weight:
copper(II) nitrate: 1.3% by wt. to 2.6% by wt.;
cobalt(II) nitrate: 2.6% by wt. to 5.2% by wt.;
citric acid: 4% by wt. to 8% by wt.;
water: 84.2% by wt. to 92.1% by wt.;
other substances: 0% by wt. to 1% by wt.;
with the proviso that the molar ratio of cobalt(II) nitrate to copper(II) nitrate is between 3 and 9.

7. Process according to Claim 6, with the proviso that the molar ratio of cobalt(II) nitrate to copper(II) nitrate is between 4 and 6.

8. Process according to Claim 1 or any of Claims 2 to 7, **characterized in that** the aqueous solution is prepared without addition of silver, gold, platinum, iridium, ruthenium, rhodium or palladium.

9. Process according to Claim 1 or any of Claims 2 to 8, **characterized in that** the gel is obtained by keeping the aqueous solution at a temperature between 60°C and 120°C over a period of 0.1 h to 24 h while stirring it.

10. Process according to Claim 1 or any of Claims 2 to 9, **characterized in that** the solid material is obtained by drying the gel at a temperature between 60°C and 140°C over a period of 0.1 h to 24 h.

11. Process according to Claim 1 or any of Claims 2 to 10, **characterized in that** the thermal treatment of the pulverulent catalyst precursor is effected at a temperature between 250°C and 350°C over a period of 0.1 h to 24 h.

12. Electrocatalyst comprising a matrix composed of carbon, on the surface of which there are dispersed catalytically active sites based on cobalt and catalytically active sites based on copper, produced according to Claim 1 or any of Claims 2 to 11.

13. Electrocatalyst according to Claim 12, **characterized in that** the overvoltage thereof measured in water oxidation at a current density of 10 mA/cm² and at a catalyst loading of 250 µg/cm² is between 0.1 and 0.4 V.

14. Electrochemical cell for the electrolysis of water, having an anode and having a cathode between which an electrical voltage can be applied in such a way that the anode forms the positive pole and the cathode the negative pole of the electrochemical cell, having an electrically insulating, ion-conducting separator arranged between the anode and cathode, and having a reaction space that extends between the anode and cathode for accommodation of water and for separate release of hydrogen and oxygen, wherein the reaction space is separated by the separator into an anode-side portion and a cathode-side portion, and wherein there is an electrocatalyst arranged in the anode-side portion of the reaction space, **characterized in that** the electrocatalyst is an electrocatalyst according to Claim 12.

15. Electrochemical cell according to Claim 14, **characterized in that** the separator is a porous diaphragm.

16. Electrochemical cell according to Claim 14, **characterized in that** the separator is a membrane.

17. Electrochemical cell according to Claim 16, **characterized in that** the electrocatalyst has been applied directly to the membrane as a coating.

18. Electrochemical cell according to Claim 15 or 16, **characterized in that** the electrocatalyst has been applied as a coating to a porous, electrically conductive carrier structure arranged between the separator and anode.

19. Electrochemical cell according to Claim 15 or 16, in which the anode is in porous form, **characterized in that** the electrocatalyst has been applied to a porous anode as a coating.

20. Process for preparing hydrogen (H₂) and oxygen (O₂) by electrolysis of water (H₂O), conducted in the presence of an electrocatalyst according to Claim 12.

21. Process according to Claim 20, **characterized in that** the water is present in a basic aqueous medium having a pH between 7 and 14.

22. Process according to Claim 20 or according to Claim 21, conducted in an electrochemical cell according to any of Claims 14 to 19.

## Revendications

1. Procédé pour la préparation d'un électrocatalyseur, présentant les étapes suivantes :
a) mise à disposition d'eau ;
b) mise à disposition d'au moins un sel de cuivre ;
c) mise à disposition d'au moins un sel de cobalt ;
d) mise à disposition d'au moins un réducteur organique ;
e) préparation d'une solution aqueuse à partir de l'eau, des sels métalliques mis à disposition et du réducteur organique ;
f) obtention d'un gel à partir de ladite solution aqueuse ;
g) séchage du gel avec obtention d'un solide ;
h) broyage du solide en un précurseur catalytique sous forme de poudre ;
i) traitement thermique du précurseur catalytique sous forme de poudre en présence d'oxygène avec obtention de l'électrocatalyseur ; **caractérisé**
j) **en ce que** l'offre d'oxygène lors du traitement thermique du précurseur catalytique sous forme de poudre est limitée,
k) le rapport entre la quantité d'oxygène offerte de manière limitée et la masse du précurseur catalytique traité se situe entre 0,01 mmole/g et 8 mmoles/g.

2. Procédé selon la revendication 1, **caractérisé en ce qu'**il s'agit, pour les sels métalliques mis à disposition, d'acétates et/ou de nitrates et/ou d'oxalates.

3. Procédé selon la revendication 2, **caractérisé en ce qu'**il s'agit, pour les sels métalliques mis à disposition, de nitrate de cuivre (II) et de nitrate de cobalt (II).

4. Procédé selon la revendication 1 ou selon l'une quelconque des revendications 2 à 3, **caractérisé en ce qu'**il s'agit, pour le réducteur organique, d'un acide qui est choisi dans le groupe comprenant les acides suivants : acide citrique, acide oxalique, acide maléique.

5. Procédé selon la revendication 4, **caractérisé en ce qu'**il s'agit, pour le réducteur organique, d'acide citrique.

6. Procédé selon la revendication 5, **caractérisé en ce que** la solution aqueuse présente la composition suivante, se complétant à 100% en poids :
nitrate de cuivre (II) : 1,3% en poids à 2,6% en poids ;
nitrate de cobalt (II): 2,6% en poids à 5,2% en poids ;
acide citrique : 4% en poids à 8% en poids ;
eau : 84,2% en poids à 92,1% en poids ;
autres substances : 0% en poids à 1% en poids ;
sous réserve que le rapport molaire entre le nitrate de cobalt (II) et le nitrate de cuivre (II) se situe entre 3 et 9.

7. Procédé selon la revendication 6, sous réserve que le rapport molaire entre le nitrate de cobalt (II) et le nitrate de cuivre (II) se situe entre 4 et 6.

8. Procédé selon la revendication 1 ou selon l'une quelconque des revendications 2 à 7, **caractérisé en ce que** la solution aqueuse est préparée sans addition d'argent, d'or, de platine, d'iridium, de ruthénium, le rhodium ou de palladium.

9. Procédé selon la revendication 1 ou selon l'une quelconque des revendications 2 à 8, **caractérisé en ce que** le gel est obtenu **en ce que** la solution aqueuse est maintenue sur une période de 0,1 h à 24 h à une température entre 60°C et 120°C tout en étant agitée.

10. Procédé selon la revendication 1 ou selon l'une quelconque des revendications 2 à 9, **caractérisé en ce que** le solide est obtenu **en ce que** le gel est séché sur une période de 0,1 h à 24 h à une température entre 60°C et 140°C.

11. Procédé selon la revendication 1 ou selon l'une quelconque des revendications 2 à 10, **caractérisé en ce que** le traitement thermique du précurseur catalytique sous forme de poudre a lieu à une température entre 250°C et 350°C sur une période de 0,1 h à 24 h.

12. Électrocatalyseur comprenant une matrice de carbone sur la surface de laquelle sont dispersés des centres catalytiquement actifs à base de cobalt et des centres catalytiquement actifs à base de cuivre, préparé selon la revendication 1 ou selon l'une quelconque des revendications 2 à 11.

13. Électrocatalyseur selon la revendication 12, **caractérisé en ce que** sa surtension mesurée dans l'oxydation d'eau à une densité de courant de 10 mA/cm² et à une charge catalytique de 250 µg/cm² se situe entre 0,1 et 0,4 V.

14. Cellule électrochimique pour l'électrolyse de l'eau, présentant une anode et une cathode entre lesquelles peut être appliquée une tension électrique de manière telle que l'anode forme le pôle positif et que la cathode forme le pôle négatif de la cellule électrochimique, présentant un séparateur électriquement isolant, ioniquement conducteur, disposé entre l'anode et la cathode et présentant un espace de réaction s'étendant entre l'anode et la cathode pour recevoir de l'eau et pour la distribution séparée d'hydrogène et d'oxygène, l'espace de réaction étant séparé par le séparateur en une partie côté anode et une partie côté cathode et un électrocatalyseur étant disposé dans la partie côté anode de l'espace de réaction, **caractérisée en ce qu'**il s'agit, pour l'électrocatalyseur, d'un électrocatalyseur selon la revendication 12.

15. Cellule électrochimique selon la revendication 14, **caractérisée en ce qu'**il s'agit, pour le séparateur, d'un diaphragme poreux.

16. Cellule électrochimique selon la revendication 14, **caractérisée en ce qu'**il s'agit, pour le séparateur, d'une membrane.

17. Cellule électrochimique selon la revendication 16, **caractérisée en ce que** l'électrocatalyseur est appliqué en tant que revêtement directement sur la membrane.

18. Cellule électrochimique selon la revendication 15 ou 16, **caractérisée en ce que** l'électrocatalyseur est appliqué en tant que revêtement sur une structure support électriquement conductrice, poreuse, disposée entre le séparateur et l'anode.

19. Cellule électrochimique selon la revendication 15 ou 16, pour laquelle l'anode est réalisée de manière poreuse, **caractérisée en ce que** l'électrocatalyseur est appliqué en tant que revêtement sur une anode poreuse.

20. Procédé pour la préparation d'hydrogène (H₂) et d'oxygène (O₂) par électrolyse de l'eau (H₂O), mis en œuvre en présence d'un électrocatalyseur selon la revendication 12.

21. Procédé selon la revendication 20, **caractérisé en ce que** l'eau est contenue dans un milieu aqueux basique, dont le pH est situé entre 7 et 14.

22. Procédé selon la revendication 20 ou selon la revendication 21, mis en œuvre dans une cellule électrochimique selon l'une quelconque des revendications 14 à 19.
